# EUROPEAN PATENT APPLICATION

(11) **EP 3 118 752 A1**
(43) Date of publication of application: **18.01.2017**
(21) Application number: 14885351.8
(22) Date of filing: 15.12.2014
(51) Int. Cl.: G06F 17/30

(54) **SEARCH METHOD, SYSTEM, AND DEVICE**

(30) Priority: 11.03.2014 CN 201410088283; 28.07.2014 CN 201410364133
(71) Applicant: Baidu Online Network Technology (Beijing) Co., Ltd, Beijing 100085 (CN)
(72) Inventor: DENG, Peng, Beijing 100085 (CN)
(74) Representative: Maiwald Patentanwalts GmbH
(86) International application number: PCT/CN2014/093888
(87) International publication number: WO 2015/135353

(57) **Abstract**

Provided are a search method, system, and device. The method comprises the following steps: receiving a search term; acquiring multiple search results on the basis of the revealed search term and acquiring correlated results corresponding to each search result; and, providing a search result display page, where the revealed search result display page comprises multiple display areas, each display area displays one search result, and, when an operation of a user regarding the display areas is received, the correlated results corresponding to the revealed search results are displayed in the revealed display areas. The search method of the present invention allows a search result page to be further diversified in terms of structure and further flexible in terms of display format and is capable of enticing search activities of a user; in addition, by means of interaction with the user, contents of further enriched search results are provided, thus satisfying search demands of the user in further aspects, increasing the degree of fun in searches, and enhancing search experience for the user.

## Description

### CROSS-REFERENCE TO RELATED APPLICATION

This application claims priority to and benefits of Chinese Patent Application Serial No. 201410088283.X, titled by "METHOD AND APPARATUS FOR PROVIDING SEARCH RESULT", filed on March 11, 2014 by Baidu Online Network Technology (Beijing) Co., Ltd, and of Chinese Patent Application Serial No. 201410364133.7, titled by "SEARCH METHOD, SYSTEM AND APPARATUS", filed on July 28, 2014 by Baidu Online Network Technology (Beijing) Co., Ltd.

### FIELD

The present disclosure relates to a search technology, and more particularly to a search method, system and apparatus.

### BACKGROUND

With the continuous development of the mobile terminal technology and the enrichment of functions, the mobile terminal has been widely applied in the daily life of people. Since the mobile terminal has a feature of portability, searching via a mobile terminal has become a main manner for the user. However, because of the limitation of the size of the screen, the mobile terminal mostly provides the search result in a form of list, in which generally 3 to 4 pieces of search results may be displayed on the screen, and it is difficult to display the completed and abundant search result and additional functions (such as collection, comment, recommendation and other access functions) like a traditional personal computer. Therefore, currently, as far as the searching via a mobile terminal, the search result is insufficient in the display content, is single in the display form, and an interaction with the user is absented, such that the user experience is poor.

### SUMMARY

Embodiments of the present disclosure seek to solve the problems above to at least some extent.

Accordingly, a first objective of the present disclosure is to provide a search method, to realize a more diversified structure of a search result page and a more flexible display form of the search result, to provide more abundant contents for the search result, thus meeting a user's search demand in further aspects.

A second objective of the present disclosure is to provide a search system.

A third objective of the present disclosure is to provide a search apparatus.

A fourth objective of the present disclosure is to provide a terminal device.

A fifth objective of the present disclosure is to provide a non-transitory computer storage medium.

In order to achieve the above objectives, according to embodiments of a first aspect of the present disclosure, a search method is provided, including following steps: receiving a search term; obtaining a plurality of search results according to the search term, and obtaining an associated result corresponding to each search result; and providing a search result display page, in which the search result display page includes a plurality of display regions, in which a display region displays a search result and an associated result corresponding to the search result is displayed in the display region if an operation performed on the display region by a user is received.

With the search method according to embodiments of the present disclosure, the plurality of display regions are provided in the search result display page so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

According to embodiments of a second aspect of the present disclosure, a search system is provided, including: a mobile terminal; and a search engine, configured to receive a search term, to obtain a plurality of search results according to the search term, and to obtain an associated result corresponding to each search result, and to provide a search result display page, in which the search result display page includes a plurality of display regions, in which a display region is for displaying a search result, an operation performed on the display region by a user is received, and an associated result corresponding to the search result is displayed in the display region if the mobile terminal receives the operation performed on the display region.

With the search system according to embodiments of the present disclosure, the plurality of display regions are provided in the search result display page by the search engine so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

According to embodiments of a third aspect of the present disclosure, a search apparatus is provided, including: a receiving module, configured to receive a search term; an obtaining module, configured to obtain a plurality of search results according to the search term, and to obtain an associated result corresponding to each search result; a providing module, configured to provide a search result display page, in which the search result display page includes a plurality of display regions, in which a display region is for displaying a search result, and an associated result corresponding to the search result is displayed in the display region if an operation performed on the display region by a user is received.

With the search apparatus according to embodiments of the present disclosure, the plurality of display regions are provided in the search result display page so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

According to embodiments of a fourth aspect of the present disclosure, a terminal device is provided, including: one or more processors; a memory; one or more programs stored in the memory, when executed by the one or more processors, performing following operations: receiving a search term; obtaining a plurality of search results according to the search term, and obtaining an associated result corresponding to each search result; and providing a search result display page, in which the search result display page includes a plurality of display regions, in which a display region is for displaying a search result and an associated result corresponding to the search result is displayed in the display region if an operation performed on the display region by a user is received.

According to embodiments of a fifth aspect of the present disclosure, a non-transitory computer storage medium having one or more programs stored therein is provided. When executed by a device, the one or more programs cause the device to: receive a search term; obtain a plurality of search results according to the search term, and obtain an associated result corresponding to each search result; and provide a search result display page, in which the search result display page includes a plurality of display regions, in which a display region is for displaying a search result and an associated result corresponding to the search result is displayed in the display region if an operation performed on the display region by a user is received.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a search method according to an embodiment of the present disclosure;
Fig. 2a is a schematic view showing an operation on a display card with a natural result according to an embodiment of the present disclosure;
Fig. 2b is a schematic view showing an operation on a display card with a popularization link result according to an embodiment of the present disclosure;
Fig. 2c is a schematic view showing an operation on a display card with a news result according to an embodiment of the present disclosure;
Fig. 2d is a schematic view showing multiple sides of a display card according to an embodiment of the present disclosure;
Fig. 3 is a schematic view showing a search method of displaying a search result in a form of a display card according to an embodiment of the present disclosure;
Fig. 4 is a schematic structural diagram of a search system according to an embodiment of the present disclosure;
Fig. 5 is a schematic structural diagram of a search apparatus according to an embodiment of the present disclosure; and
Fig. 6 is a schematic structural diagram of a search apparatus according to another embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

In the description of the present invention, it should be noted that, "a plurality of" means two or more than two. In addition, terms such as "first" and "second" are used herein for purposes of description and are not intended to indicate or imply relative importance or significance or to imply the number of indicated technical features.

A search method, system and apparatus according to embodiments of the present disclosure are described below with reference to drawings.

It should be noted that, the embodiments of the present disclosure are preferred applicable for a mobile terminal, such as an IOS operating system (which is an operating system for a handheld device and is developed by Apple Inc), an Android operating system (which is an operating system based on a free and open source code of Linux), and a Windows Phone operating system (which is a mobile phone operating system issued by Microsoft), and is also applicable for a personal computer or other smart mobile terminals, which are not restricted in the present disclosure. It should be understood that, in the embodiments of the present disclosure, the mobile terminal may be a hardware device with various operating systems, such as a mobile phone, a tablet, a personal digital assistant, an e-reader, etc.

In order to solve the problem that the search result is insufficient in the display content and is single in the display form, the present disclosure presents a search method, including following steps: receiving a search term; obtaining a plurality of search results according to the search term, and obtaining an associated result corresponding to each search result; and providing a search result display page, in which the search result display page includes a plurality of display regions, each display region is for displaying a search result, and an associated result corresponding to the search result is displayed in the display region if an operation performed on the display region by a user is received.

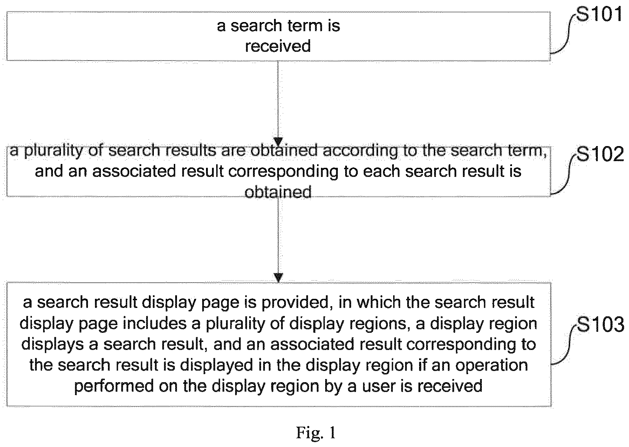

Fig. 1 is a flow chart of a search method according to an embodiment of the present disclosure.

As shown in Fig. 1, the search method according to the embodiment of the present disclosure includes following steps.

In step S101, a search term is received.

Specifically, in this embodiment of the present disclosure, a search engine may provide a search term input box via a terminal device, such that the search term inputted by a user may be received through the input box. Sure, the search engine may also be provided with other various shortcut input modes for the user to input the search term, for instance, the search engine may recommend a search term to the user, which are not restricted in the present disclosure.

In step S102, a plurality of search results are obtained according to the search term, and an associated result corresponding to each search result is obtained.

In this embodiment of the present disclosure, the search result obtained by the search engine may include a natural result, a popularization link result and a news result, etc. The natural result refers to a result ( such as a webpage, a document, a video, a picture, etc.) containing the search term or associated with the search term in respective websites obtained by the search engine based on the search term; the popularization link result refers to a link result with respect to a popularization activity of a website, a webpage or a product and associated with the search term; the news result refers to a news content associated with the search term.

In this embodiment of the present disclosure, the associated result may be any search result. In order to promote an interaction performance of searching and to motivate a further search of the user directed to the search result, however, the associated result may be a content associated with the search result. The associated result includes a trigger button associated with the search result and/or a content associated with the search result.

In one embodiment of the present disclosure, if the search result is a natural result, the associated result is one or more of a collection trigger button, a user evaluation content, a user personalized custom content and an advertisement content associated with the natural result; if the search result is a popularization link result, the associated result is one or more of a prize-accepting trigger button, a prize content and an advertisement content associated with the popularization link result; if the search result is a news result, the associated result is one or more of comment information, an access to a forum and a comment input box associated with the news result.

In step S103, a search result display page is provided, in which the search result display page includes a plurality of display regions, each display region is for displaying one search result, and an associated result corresponding to the search result is displayed in the display region if an operation performed on the display region by a user is received.

In one embodiment of the present disclosure, the display region is displayed in the search result display page in a form of a display card, and the search result is displayed on the display card. An associated result corresponding to the display card is displayed if an operation performed on the display card by the user is conformity with a predetermined operation. The predetermined operation may be a sliding operation, sure, may also be a flip over operation.

In one embodiment of the present disclosure, if the user inputs the sliding operation aimed at the display card, the display card is controlled to slide, and if the display card slides to a predetermined position, the display card is controlled to stop sliding, and the associated result corresponding to the display card is displayed in a region exposed by a sliding of the display card during the sliding of the display card. After the display card stops sliding, the display card is controlled to return to an initial position if the user clicks the display card.

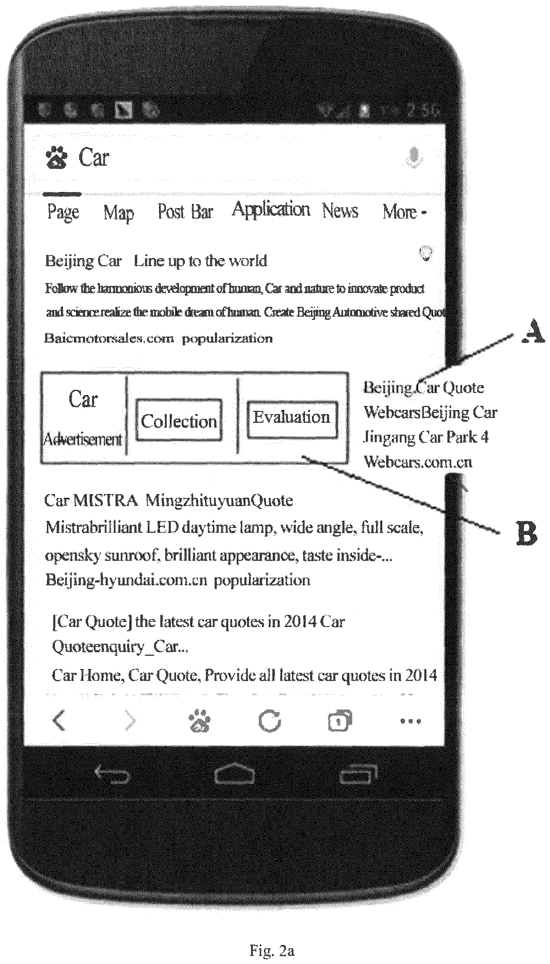

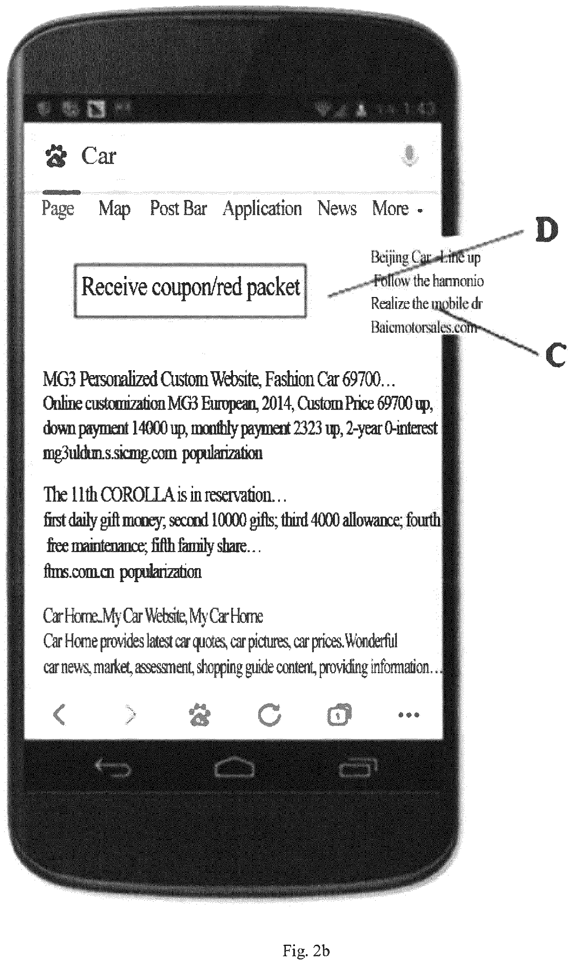

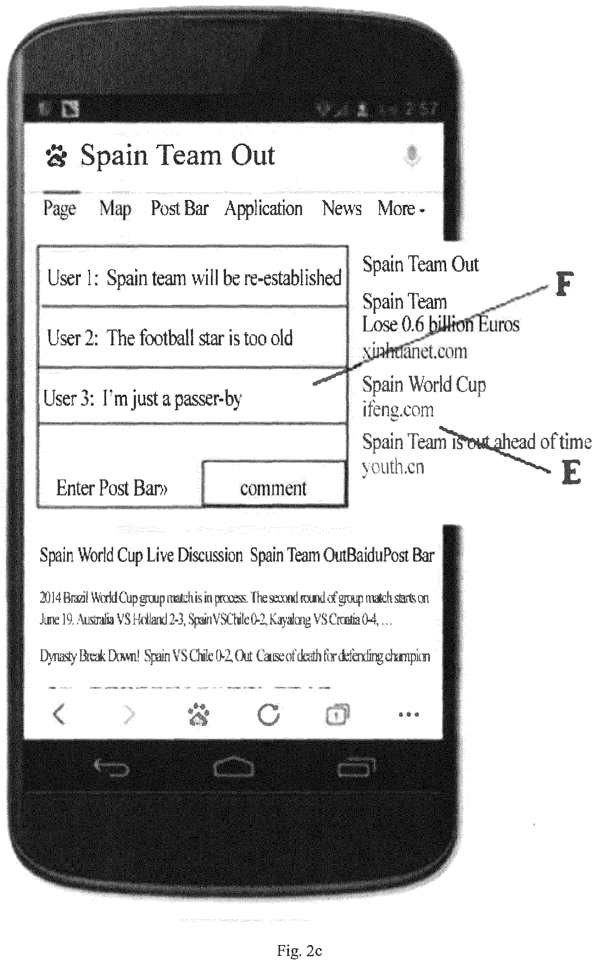

Specifically, Fig. 2a is a schematic view showing an operation on a display card with a natural result according to an embodiment of the present disclosure; Fig. 2b is a schematic view showing an operation on a display card with a popularization link result according to an embodiment of the present disclosure; Fig. 2c is a schematic view showing an operation on a display card with a news result according to an embodiment of the present disclosure.

As shown in Fig. 2a, if an operation of sliding to the right is performed on the display card of a second search result (which is a natural result), the display card is controlled to slide until reaching a predetermined position (for instance, a sliding distance is 80% of a width of the screen, in this case the display card only occupies 20% of the width, the search result in the display card may only shows 20% of the content, or may be displayed in the display card region with the 20% width in a form of a thumbnail), at this moment, only a part of the display card (A) is shown, and a space behind the card is exposed. During the sliding of the display card, a corresponding collection button, a user evaluation button, a personalized custom content and an advertisement content or other contents (B) may be shown gradually in the exposed space, such that the user may click a corresponding button or content according to demands to make a collection, a evaluation, a personalized customization or view an advertisement.

A function corresponding to the collection button needs to be associated with a user account. A login is realized by a pop-up box if there is a user account, and the user may be prompted to register if there is no user account. A collected link may be stored in a personal space in a cloud server. In addition, a collection button may be provided at an upper right corner of a logion user, and a collecting classification and a specific collection name may be listed while the collection button is clicked.

A function of the evaluation button is to assess the search result in the current display card, and the user may choose to make an anonymous evaluation or make a evaluation with the user name. Contents of evaluation may be put into a database of the search engine as feedback information which is used by the search engine as a factor for adjusting a ranking weight of the search results. A rank of the search result is gradually optimized by big data processing.

The personalized custom button may be clicked by the user so as to pop up a personalized custom box provided to the user for electing customizations such as a skin, a card color and a mode (or highlight a current page) of the search result page.

The advertisement content may be displayed according to a launch strategy, which may be an advertisement related or unrelated to the content of the current display card. A form of the advertisement is not restricted herein, which may be a text link or a small picture.

As shown in Fig. 2b, if an operation of sliding to the right is performed on the display card of a first search result (which is a popularization link result), the display card is controlled to slide until reaching a predetermined position (C). During the sliding of the display card, a corresponding "accept prize" button (D) may be shown gradually in the exposed space. The prize may be a promo coupon, a gift coupon from a seller. After the user clicks the "accept prize" button, it is redirected to the seller's page for accepting the prize or using an application like a wallet to recharge.

As shown in Fig. 2c, if an operation of sliding to the right is performed on the display card of a hotspot news search result, the display card is controlled to slide until reaching a predetermined position (E). During the sliding of the display card, a comment content aimed at the hotspot news and a comment button (F) may be shown gradually in the exposed space. The user may view the comment content, and may publish a comment by clicking the comment button. The comment may be published with a user name or anonymously. Besides, an access to comment, such as a post bar or an access to a forum, may be shown, and the user may enter a corresponding website via the access.

In this embodiment of the present disclosure, after the display card stops sliding, the display card is controlled to return to an initial position, if the user clicks the display card. Sure, the display card may be controlled to return to the initial position via other control operations, for instance, via inputting a sliding operation with a direction which is opposite to a direction of the previous sliding operation.

In one embodiment of the present disclosure, the display card may be controlled to display the search result and/or the corresponding associated result via a flip over effect of the display card. Specifically, the display card may show the search result at a first side and shows the corresponding associated result at a second side. If the display card currently shows the search result, the display card may be controlled to be flipped over to show the associated result at the second side if a predetermined operation is performed on the display card. The display card is controlled to flip over again, if a click on the display card is received or the predetermined operation is received again.

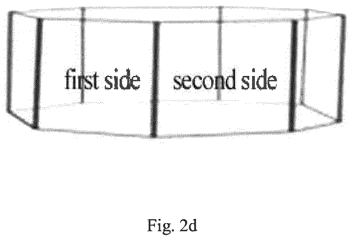

Sure, the display card in the embodiment of the present disclosure may also include a plurality of sides. For instance, the display card may be in a form of a polyhedron as shown in Fig. 2d, in which the first side and the second side are any two sides of the polyhedron; or the display card may be in a form of stacking a plurality of layers, in which the first side and the second side are a first layer side and a second layer side, respectively, which are not restricted in this present disclosure. The user may control the display contents of the display card to be switched among the plurality of sides by the operations described above.

It should be understood that, the plurality of sides of the display card should be understood in broad. The search results and corresponding associated results may be displayed respectively via a plurality of display cards, and the plurality of display cards may be controlled to be switched by user's operation, which also belongs to the scope of present disclosure.

With the search method according to embodiments of the present disclosure, the plurality of display regions are provided in the search result display page so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

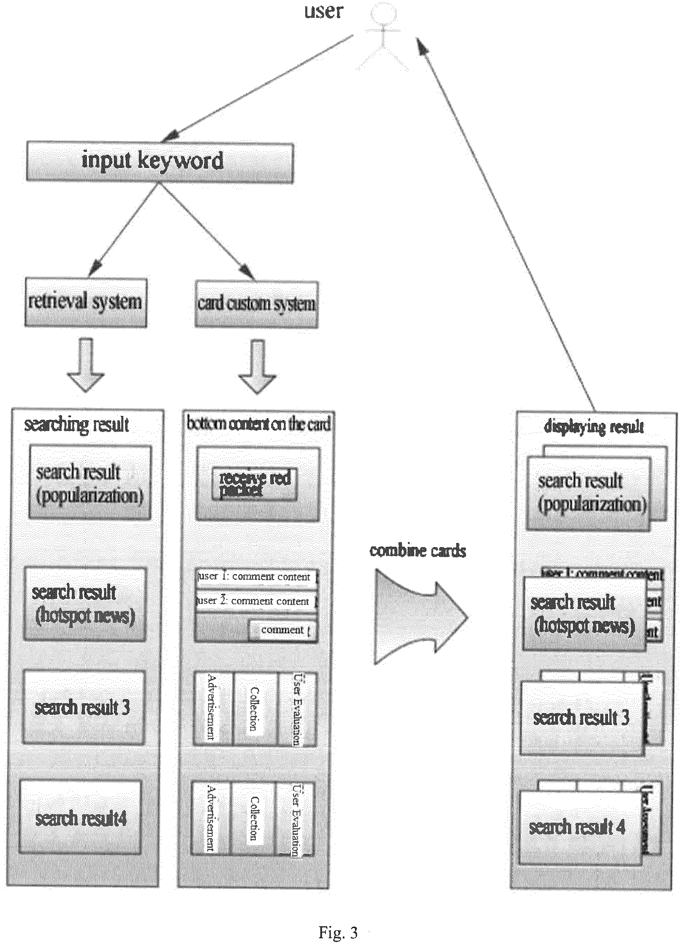

Fig. 3 is a schematic view showing a search method of displaying a search result in a form of a display card according to an embodiment of the present disclosure. The search engine may include a retrieval system and a card customizing system. The retrieval system is configured to obtain the plurality of search results and the associated results corresponding to respective search results according to the key word (search term) inputted by the user, and the card customizing system is configured to customize a corresponding display card according to the search result and the associated result, and to combine the display card of the search result and the display card of the corresponding associated result together for providing to a terminal device for displaying.

Therefore, the search method according to embodiments of the present disclosure may provide more search result display positions, which is better matched with a mobile search. In addition, by increasing a value-added service, a cashability of the search engine is improved, so as to meet different demands of the user to a larger extent.

In order to implement above embodiments, the present disclosure further provides a search system.

The search system includes a mobile terminal and a search engine. The mobile terminal is configured to transmit a search term to the search engine, to display a search result display page provided by the search engine. The search result display page includes a plurality of display regions, each display region is for displaying one search result and an operation performed on the display region is received from a user. The search engine is configured to receive the search term, to obtain a plurality of search results according to the search term, and to obtain an associated result corresponding to each search result, and to provide a search result display page, and to display an associated result corresponding to a search result in a display region if the mobile terminal receives the operation performed on the display region.

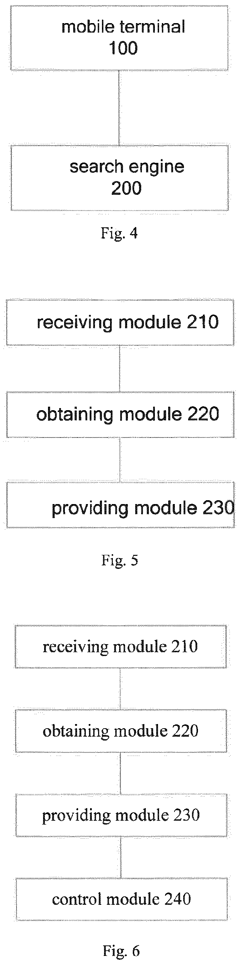

Fig. 4 is a schematic structural diagram of a search system according to an embodiment of the present disclosure.

As shown in Fig. 4, the search system according to the embodiment of the present disclosure includes: a mobile terminal 100 and a search engine 200.

Specifically, the mobile terminal 100 is configured to transmit a search term to the search engine, to display a search result display page provided by the search engine. The search result display page includes a plurality of display regions, each display region is for displaying one search result and an operation performed on the display region is received from a user. More specifically, in the embodiment of the present disclosure, the mobile terminal 100 may provide a search term input box, so as to receive the search term inputted by the user through the input box. Sure, the mobile terminal 100 may also be provided with other various shortcut input modes for the user to input the search term, for instance, by displaying the recommended search terms, the search term may be determined based on user's selection operation, which are not restricted in the present disclosure.

In one embodiment of the present disclosure, the display region is displayed in the search result display page in a form of a display card, and one search result is displayed on one display card.

The search engine 200 is configured to receive the search term, to obtain a plurality of search results according to the search term, and to obtain an associated result corresponding to each search result, and to provide a search result display page, and to display an associated result corresponding to a search result in a display region if the mobile terminal 100 receives an operation performed on the display region by a user.

In the embodiment of the present disclosure, the search result obtained by the search engine 200 may include a natural result, a popularization link result and a news result, etc. The natural result refers to a result (such as a webpage, a document, a video, a picture, etc.) containing the search term or associated with the search term in respective websites obtained by the search engine 200 based on the search term; the popularization link result refers to a link result with respect to a popularization activity of a website, a webpage or a product and associated with the search term; the news result refers to a news content associated with the search term.

In the embodiment of the present disclosure, the associated result includes a trigger button associated with the search result and/or a content associated with the search result.

In one embodiment of the present disclosure, if the search result is a natural result, the associated result is one or more of a collection trigger button, a user evaluation content, a user personalized custom content and an advertisement content associated with the natural result; if the search result is a popularization link result, the associated result is one or more of a prize-accepting trigger button, a prize content and an advertisement content associated with the popularization link result; if the search result is a news result, the associated result is one or more of comment information, an access to a forum and a comment input box associated with the news result.

In one embodiment of the present disclosure, after providing the search result display page to the mobile terminal 100, the search engine 200 displays an associated result corresponding to a display card if an operation performed on the display card in the search result display page by the user is conformity with a predetermined operation. The predetermined operation may be a sliding operation, sure, may also be a flip over operation.

In one embodiment of the present disclosure, if the user inputs the sliding operation aimed at the display card, the display card is controlled to slide and if the display card slides to a predetermined position, the display card is controlled to stop sliding, and the associated result corresponding to the display card is displayed in a region exposed by a sliding of the display card during the sliding of the display card. After the display card stops sliding, the display card is controlled to return to an initial position if the user clicks the display card.

More specifically, Fig. 2a is a schematic view showing an operation on a display card with a natural result according to an embodiment of the present disclosure; Fig. 2b is a schematic view showing an operation on a display card with a popularization link result according to an embodiment of the present disclosure; Fig. 2c is a schematic view showing an operation on a display card with a news result according to an embodiment of the present disclosure.

As shown in Fig. 2a, if an operation of sliding to the right is performed on the display card of a second search result (which is a natural result), the display card is controlled to slide until reaching a predetermined position (for instance, a sliding distance is 80% of a width of the screen, in this case the display card only occupies 20% of the width, the search result in the display card may only shows 20% of the content, or may be displayed in the display card region with the 20% width in a form of a thumbnail), at this moment, only a part of the display card is shown, and a space behind the card is exposed. During the sliding of the display card, a corresponding collection button, a user evaluation button, a personalized custom content, an advertisement content or other contents may be shown gradually in the exposed space, such that the user may click a corresponding button or content according to demands to make a collection, a evaluation, a personalized customization or view an advertisement.

A function corresponding to the collection button needs to be associated with a user account. A login is realized by a pop-up box if there is a user account, and the user may be prompted to register if there is no user account. A collected link may be stored in a personal space in a cloud server. In addition, a collection button may be provided at an upper right corner of a logion user, and a collecting classification and a specific collection name may be listed while the collection button is clicked.

A function of the evaluation button is to assess the search result in the current display card, and the user may choose to make an anonymous evaluation or make a evaluation with the user name. Contents of evaluation may be put into a database of the search engine as feedback information which is used by the search engine as a factor for adjusting a ranking weight of the search results. A rank of the search result is gradually optimized by big data processing.

The personalized custom button may be clicked by the user so as to pop up a personalized custom box provided to the user for electing customizations such as a skin, a card color and a mode (or highlight a current page) of the search result page.

The advertisement content may be displayed according to a launch strategy, which may be an advertisement related or unrelated to the content of the current display card. A form of the advertisement is not restricted herein, which may be a text link or a small picture.

As shown in Fig. 2b, if an operation of sliding to the right is performed on the display card of a first search result (which is a popularization link result), the display card is controlled to slide until reaching a predetermined position. During the sliding of the display card, a corresponding "accept prize" button may be shown gradually in the exposed space. The prize may be a promo coupon, a gift coupon from a seller. After the user clicks the "accept prize" button, it is redirected to the seller's page for accepting the prize or using an application like a wallet to recharge.

As shown in Fig. 2c, if an operation of sliding to the right is performed on the display card of a hotspot news search result, the display card is controlled to slide until reaching a predetermined position. During the sliding of the display card, a comment content aimed at the hotspot news and a comment button may be shown gradually in the exposed space. The user may view the comment content, and may publish a comment by clicking the comment button. The comment may be published with a user name or anonymously. Besides, an access to comment, such as a post bar or an access to a forum, may be shown, and the user may enter a corresponding website via the access.

In this embodiment of the present disclosure, after the display card stops sliding, the display card is controlled to return to an initial position, if the user clicks the display card. Sure, the display card may be controlled to return to the initial position via other control operations, for instance, via inputting a sliding operation with a direction which is opposite to a direction of the previous sliding operation.

In one embodiment of the present disclosure, the display card may be controlled to display the search result and/or the corresponding associated result via a flip over effect of the display card. Specifically, the display card may show the search result at a first side and shows the corresponding associated result at a second side. If the display card currently shows the search result, the display card may be controlled to be flipped over to show the associated result at the second side if a predetermined operation is performed on the display card. The display card is controlled to flip over again, if a click on the display card is received or the predetermined operation is received again.

With the search system according to embodiments of the present disclosure, the plurality of display regions are provided in the search result display page by the search engine so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

In order to implement above embodiments, the present disclosure further provides a search apparatus.

The search apparatus includes a receiving module, configured to receive a search term; an obtaining module, configured to obtain a plurality of search results according to the search term, and to obtain an associated result corresponding to each search result; and a providing module, configured to provide a search result display page, in which the search result display page includes a plurality of display regions, a display region is for displaying a search result, and an associated result corresponding to the search result is displayed in a display region if an operation performed on the display region by a user is received.

Fig. 5 is a schematic structural diagram of a search apparatus according to an embodiment of the present disclosure.

As shown in Fig. 5, the search apparatus according to the embodiment of the present disclosure includes: a receiving module 210, an obtaining module 220 and a providing module 230.

Specifically, the receiving module 210 is configured to receive the search term. More specifically, in the embodiment of the present disclosure, the receiving module 210 may provide a search term input box via a terminal device so as to receive the search term inputted by the user. Sure, the receiving module 210 may also receive the search term inputted by the user in other various shortcut input modes provided by the terminal device. For instance, the search engine may recommend a search term to the user, and the receiving module 210 may determine a corresponding search term according to the user's selection, which are not restricted in the present disclosure.

The obtaining module 220 is configured to obtain a plurality of search results according to the search term, and to obtain an associated result corresponding to each search result. In the embodiment of the present disclosure, the search result obtained by the obtaining module 220 may include a natural result, a popularization link result and a news result, etc. The natural result refers to a result ( such as a webpage, a document, a video, a picture, etc.) containing the search term or associated with the search term in respective websites obtained by the search engine based on the search term; the popularization link result refers to a link result with respect to a popularization activity of a website, a webpage or a product and associated with the search term; the news result refers to a news content associated with the search term.

In the embodiment of the present disclosure, the associated result includes a trigger button associated with the search result and/or a content associated with the search result.

In one embodiment of the present disclosure, if the search result is a natural result, the associated result is one or more of a collection trigger button, a user evaluation content, a user personalized custom content and an advertisement content associated with the natural result; if the search result is a popularization link result, the associated result is one or more of a prize-accepting trigger button, a prize content and an advertisement content associated with the popularization link result; if the search result is a news result, the associated result is one or more of comment information, an access to a forum and a comment input box associated with the news result.

The providing module 230 is configured to provide a search result display page, in which the search result display page includes a plurality of display regions, each display region is for displaying a search result, and an associated result corresponding to the search result is displayed in a display region when receiving an operation of a user directed to the display region.

In one embodiment of the present disclosure, the display region is displayed in the search result display page in the form of the display card, and the search result is displayed on the display card. If the operation of the user aimed at the display region is conformity with a predetermined operation, the providing module 230 may display the associated result corresponding to the display card. The predetermined operation may be a sliding operation, sure, may also be a flip over operation.

Fig. 6 is a schematic structural diagram of a search apparatus according to another embodiment of the present disclosure. Based on the search apparatus shown in Fig. 5, the search apparatus shown in Fig. 6 further includes a control module 240.

Specifically, the control module 240 is configured to control the display card to slide if the user inputs a sliding operation aimed at the display card, to control the display card to stop sliding if the display card slides to a predetermined position, and to display the associated result corresponding to the display card in a region exposed by a sliding of the display card during the sliding of the display card. After the display card stops sliding, the control module 240 is further configured to control the display card to return to an initial position if the user clicks the display card.

More specifically, Fig. 2a is a schematic view showing an operation on a display card with a natural result according to an embodiment of the present disclosure; Fig. 2b is a schematic view showing an operation on a display card with a popularization link result according to an embodiment of the present disclosure; Fig. 2c is a schematic view showing an operation on a display card with a news result according to an embodiment of the present disclosure.

As shown in Fig. 2a, if an operation of sliding to the right is performed on the display card of a second search result (which is a natural result), the control module 240 controls the display card to slide until the display card reaches a predetermined position (for instance, a sliding distance is 80% of a width of the screen, in this case the display card only occupies 20% of the width, the search result in the display card may only shows 20% of the content, or may be displayed in the display card region with the 20% width in a form of a thumbnail), at this moment, only a part of the display card is shown (as shown in A), and a space behind the card is exposed. During the sliding of the display card, a corresponding collection button, a user evaluation button, a personalized custom content, an advertisement content or other contents may be shown gradually in the exposed space (as shown in B), such that the user may click a corresponding button or content according to demands to make a collection, a evaluation, a personalized customization or view an advertisement.

A function corresponding to the collection button needs to be associated with a user account. A login is realized by a pop-up box if there is a user account, and the user may be prompted to register if there is no user account. A collected link may be stored in a personal space in a cloud server. In addition, a collection button may be provided at an upper right corner of a logion user, and a collecting classification and a specific collection name may be listed while the collection button is clicked.

A function of the evaluation button is to assess the search result in the current display card, and the user may choose to make an anonymous evaluation or make a evaluation with the user name. Contents of evaluation may be put into a database of the search engine as feedback information which is used by the search engine as a factor for adjusting a ranking weight of the search results. A rank of the search result is gradually optimized by big data processing.

The personalized custom button may be clicked by the user so as to pop up a personalized custom box provided to the user for electing customizations such as a skin, a card color and a mode (or highlight a current page) of the search result page.

The advertisement content may be displayed according to a launch strategy, which may be an advertisement related or unrelated to the content of the current display card. A form of the advertisement is not restricted herein, which may be a text link or a small picture.

As shown in Fig. 2b, if an operation of sliding to the right is performed on the display card of a first search result (which is a popularization link result), the control module 240 controls the display card to slide until the display card reaches a predetermined position (as shown in C). During the sliding of the display card, a corresponding "accept prize" button may be shown gradually in the exposed space (as shown in D). The prize may be a promo coupon, a gift coupon from a seller. After the user clicks the "accept prize" button, it is redirected to the seller's page for receiving the prize or using an application like a wallet to recharge.

As shown in Fig. 2c, if an operation of sliding to the right is performed on the display card of a hotspot news search result, the control module 240 controls the display card to slide until the display card reaches a predetermined position (as shown in E). During the sliding of the display card, a comment content aimed at the hotspot news (as shown in F) and a comment button may be shown gradually in the exposed space. The user may view the comment content, and may publish a comment by clicking the comment button. The comment may be published with a user name or anonymously. Besides, an access to comment, such as a post bar or an access to a forum, may be shown, and the user may enter a corresponding website via the access.

In this embodiment of the present disclosure, after the display card stops sliding, the display card is controlled to return to an initial position, if the user clicks the display card. Sure, the display card may be controlled to return to the initial position via other control operations, for instance, via inputting a sliding operation with a direction which is opposite to a direction of the previous sliding operation.

In one embodiment of the present disclosure, the display card may be controlled to display the search result and/or the corresponding associated result via a flip over effect of the display card. Specifically, the display card may show the search result at a first side and shows the corresponding associated result at a second side. If the display card currently shows the search result, the control module 240 may control the display card to be flipped over to show the associated result at the second side if a predetermined operation is performed on the display card. The control module 240 controls the display card to flip over again, if a click on the display card is received or the predetermined operation is received again.

With the search apparatus according to embodiments of the present disclosure, the plurality of display regions are provided in the search result display page so as to respectively display the plurality of search results obtained according to the search term, and the corresponding associated result is displayed according to the operation performed on the display region by the user, such that the structure of the search result page is more diversified, a display form of the search result is more flexible, and a search action of the user may be motivated. In addition, more abundant contents for the search result are provided by means of the interaction with the user, thus meeting the user's search demand in further aspects, increasing an interest of the search and promoting a search experience of the user.

In order to implement above embodiments, the present disclosure further provides a terminal device.

The terminal device according to embodiments of the present disclosure, includes: one or more processors; a memory; one or more programs stored in the memory, when executed by the one or more processors, performing following operations: receiving a search term; obtaining a plurality of search results according to the search term, and obtaining an associated result corresponding to each search result; and providing a search result display page, in which the search result display page includes a plurality of display regions, a display region is for displaying a search result, an associated result corresponding to the search result is displayed in the display region if an operation performed on the display region by a user is received.

In order to implement above embodiments, the present disclosure further provides a non-transitory computer storage medium.

The non-transitory computer storage medium according to embodiments of the present disclosure has one or more programs stored therein. When executed by a device, the one or more programs cause the device to: receive a search term; obtain a plurality of search results according to the search term, and obtain an associated result corresponding to each search result; and provide a search result display page, in which the search result display page includes a plurality of display regions, a display region is for displaying a search result, an associated result corresponding to the search result is displayed in the display region if an operation performed on the display region by a user is received.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the function may be executed not in the order shown or discussed herein, but may be executed essentially simultaneously or in contrary order, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or optical disks, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A search method, comprising:
receiving a search term;
obtaining a plurality of search results according to the search term, and obtaining an associated result corresponding to each search result; and
providing a search result display page, wherein the search result display page comprises a plurality of display regions, wherein a display region displays a search result, and an associated result corresponding to the search result is displayed in the display region if an operation performed on the display region by a user is received.

2. The search method of claim 1, wherein the display region is displayed in the search result display page in a form of a display card, the search result is displayed on the display card, and an associated result corresponding to the display card is displayed if an operation performed on the display card by the user is in conformity with a predetermined operation.

3. The search method of claim 1 or 2, wherein the associated result comprises a trigger button associated with the search result and/or a content associated with the search result.

4. The search method of claim 3, wherein
if the search result is a natural result, the associated result is one or more of a collection trigger button, a user evaluation content, a user personalized custom content and an advertisement content associated with the natural result;
if the search result is a popularization link result, the associated result is one or more of a prize-accepting trigger button, a prize content and an advertisement content associated with the popularization link result;
if the search result is a news result, the associated result is one or more of comment information, an access to a forum and a comment input box associated with the news result.

5. The search method of claim 2, further comprising:
controlling the display card to slide if the user inputs a sliding operation aimed at the display card; and
controlling the display card to stop sliding if the display card slides to a predetermined position, and displaying the associated result corresponding to the display card in a region exposed by a sliding of the display card during the sliding of the display card.

6. The search method of claim 5, after the display card stops sliding, further comprising:
controlling the display card to return to an initial position, if the user clicks the display card.

7. A search system, comprising:
a mobile terminal; and
a search engine, configured to receive a search term, to obtain a plurality of search results according to the search term, and to obtain an associated result corresponding to each search result, and to provide a search result display page, wherein the search result display page comprises a plurality of display regions, wherein a display region displays a search result, an operation performed on the display region is received from a user and an associated result corresponding to the search result is displayed in the display region if the mobile terminal receives the operation performed on the display region.

8. The search system of claim 7, wherein the display region is displayed in the search result display page in a form of a display card, the search result is displayed on the display card and the associated result corresponding to the display card is displayed if an operation performed on the display card by the user is in conformity with a predetermined operation.

9. The search system of claim 7 or 8, wherein the associated result comprises a trigger button associated with the search result, and/or a content associated with the search result.

10. The search system of claim 9, wherein
if the search result is a natural result, the associated result is one or more of a collection trigger button, a user evaluation content, a user personalized custom content and an advertisement content associated with the natural result;
if the search result is a popularization link result, the associated result is one or more of a prize-accepting trigger button, a prize content and an advertisement content associated with the popularization link result;
if the search result is a news result, the associated result is one or more of comment information, an access to a forum and a comment input box associated with the news result.

11. The search system of claim 8, wherein the search engine is specifically configured to:
control the display card to slide if the user inputs a sliding operation aimed at the display card;
control the display card to stop sliding if the display card slides to a predetermined position, and display the associated result corresponding to the display card in a region exposed by a sliding of the display card during the sliding of the display card.

12. The search system of claim 11, wherein after controlling the display card to flip over, the search engine is further configured to:
control the display card to flip over again so as to display the search result in a first side of the display card, if the user clicks a second side of the display card.

13. A search apparatus, comprising:
a receiving module, configured to receive a search term;
an obtaining module, configured to obtain a plurality of search results according to the search term, and to obtain an associated result corresponding to each search result; and
a providing module, configured to provide a search result display page, wherein the search result display page comprises a plurality of display regions, wherein a display region displays a search result, and an associated result corresponding to the search result is displayed in the display region if an operation performed on the display region by a user is received.

14. The search apparatus of claim 13, wherein the display region is displayed in the search result, display page in a form of a display card, the search result is displayed on the display card, an associated result corresponding to the display card is displayed if an operation performed on the display card by the user is in conformity with a predetermined operation.

15. The search apparatus of claim 13 or 14, wherein the associated result comprises a trigger button associated with the search result, and/or a content associated with the search result.

16. The search apparatus of claim 15, wherein
if the search result is a natural result, the associated result is one or more of a collection trigger button, a user evaluation content, a user personalized custom content and an advertisement content associated with the natural result;
if the search result is a popularization link result, the associated result is one or more of a prize-accepting trigger button, a prize content and an advertisement content associated with the popularization link result;
if the search result is a news result, the associated result is one or more of comment information, an access to a forum and a comment input box associated with the news result.

17. The search apparatus of claim 14, further comprising:
a control module, configured to control the display card to slide if the user inputs a sliding operation aimed at the display card, to control the display card to stop sliding if the display card slides to a predetermined position, and to display the associated result corresponding to the display card in a region exposed by a sliding of the display card during the sliding of the display card.

18. The search apparatus of claim 17, wherein after the display card stops sliding,
the control module is further configured to control the display card to return to an initial position if the user clicks the display card.

19. A terminal device, comprising:
one or more processors;
a memory;
one or more programs stored in the memory, when executed by the one or more processors, performing following operations:
receiving a search term;
obtaining a plurality of search results according to the search term, and obtaining an associated result corresponding to each search result; and
providing a search result display page, wherein the search result display page comprises a plurality of display regions, wherein a display region displays a search result and an associated result corresponding to the search result is displayed in the display region if an operation performed on the display region by a user is received.

20. A non-transitory computer storage medium having one or more programs stored therein, wherein when executed by a device, the one or more programs cause the device to:
receive a search term;
obtain a plurality of search results according to the search term, and obtain an associated result corresponding to each search result; and
provide a search result display page, wherein the search result display page comprises a plurality of display regions, wherein a display region displays a search result and an associated result corresponding to the search result is displayed in the display region if an operation performed on the display region by a user is received.
